# EUROPEAN PATENT SPECIFICATION

(11) **EP 1 583 598 B1**
(45) Date of publication and mention of the grant of the patent: **07.04.2010**
(21) Application number: 03767312.6
(22) Date of filing: 24.12.2003
(51) Int. Cl.: B01D 35/02, B01D 53/26, H05K 7/20

(54) **A FILTER**
FILTER
FILTRE

(30) Priority: 24.12.2002 AU 2002953575
(43) Date of publication of application: 12.10.2005
(73) Proprietor: Hella Asia Pacific Pty Ltd., Mentone, Victoria 3194 (AU)
(72) Inventor: DU PLESSIS, Urbain, Hella Asia Pacific Pty Ltd, Mentone, Victoria 3194 (AU)
(74) Representative: Patentanwälte Ruff, Wilhelm, Beier, Dauster & Partner
(86) International application number: PCT/AU2003/001726
(87) International publication number: WO 2004/058381

(56) References cited:
- WO-A-00/47932
- WO-A-97/27042
- US-A- 4 129 743
- US-A- 4 809 144
- US-A- 6 108 202
- US-B1- 6 238 467
- US-B1- 6 296 691
- US-B1- 6 395 073
- US-B1- 6 422 729
- US-B1- 6 593 525

## Description

### FIELD OF THE INVENTION

This invention relates to a filter for use with ventilated electrical equipment.

### BACKGROUND OF THE INVENTION

Ventilated electrical equipment, especially lighting, suffers from the entry of moisture, dirt and corrosive chemicals into what appear to be sealed areas of the equipment. This entry causes deterioration and ultimate breakdown of the equipment.

The root cause of the entry of potentially harmful fluids/contaminants is primarily the result of the expansion and contraction of air within the electrical equipment caused by changes in temperature.

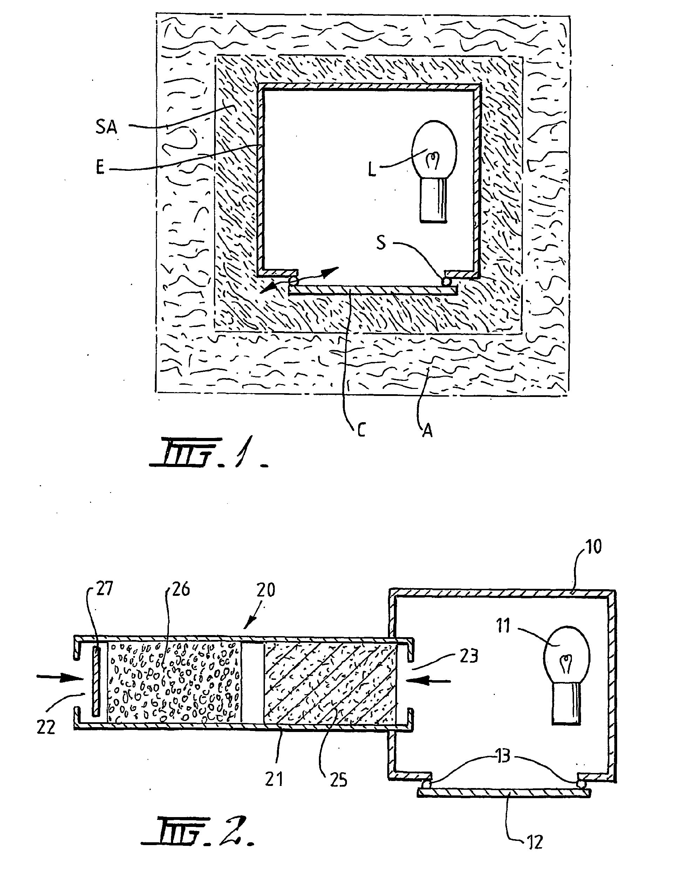

The process is typically illustrated with reference to figure 1 which is a standard light fitting. It is however understood the process is equally applicable to many other types of electrical equipment such as motors, transformers, junction boxes and cables.

Figure 1 is a schematic illustration of a conventionally sealed lighting system in which enclosure E contains a light bulb L and a cover C closes off the enclosure via a peripheral gasket or seal S. The air immediately surrounding the lighting equipment is indicted as SA the ambient air is indicated as A.

Four steps make up the process that can ultimately result in a failure of the light.

Step 1 - At installation the light is connected and closed up, trapping air inside the enclosure. The air is now at ambient temperature and pressure.

Step 2 - The lamp is energised and starts to radiate 80% or more energy as heat into the trapped air, heating the air quite effectively. The increased temperature increases the internal pressure.

Step 3 - The pressurised internal air now finds ways to escape into the ambient air, which is at a lower pressure and temperature than the air inside the light. This escape is notwithstanding the presence of seals. The escape of the pressurised internal air takes place until the internal pressure is equal to the ambient pressure.

Step 4 - The lamp is then switched off, allowing the internal air to cool and the pressure decreases which reverses the process in step three and causes entry of air into the enclosure.

This process is exasperated by some still further less obvious activity, such as the air in the immediate vicinity of the light is warmed by radiated heat from the light. This heating would initially lower the relative humidity of the air immediately surrounding the light but is quickly balanced by diffusion from the ambient air, effectively creating a pocket of warm air at the same relative humidity as the ambient air. This warm air enters the enclosure when the light is switched off. When the light reaches ambient temperature the excess moisture trapped inside cannot diffuse into the external air but condenses onto some surface like the lens of the light.

When the lamp is energised again and step 1 starts the heated air expands and leaves the light much faster than the condensate can evaporate. Thus most of the collected moisture remains inside the light. The internal pressure stabilises, the internal air warms up and the remaining condensate evaporates into it. When the lamp is later switched off, another load of slightly more humid air enters the light. This soon forms a heavy deposit of condensate collecting on the inside of the enclosure. The entry of air also has the habit of drawing in fine dust and any other corrosive materials that might be present in the air. Electrical faults occur when the condensate or carbon deposits create alternative circuits. In acid or salt laced air the conductivity of the trapped condensate may be several orders higher than fresh water, thus further contributing to breakdown of the electrical system.

The cyclic system described above concentrates the contaminates in the condensate and while the lamp supplies heat that speeds up the corrosive action compared with the same material at lower concentration and temperatures. In the event that a light is covered in a layer of moisture from dew or rain, the normally insignificant contribution of capillary action is increased significantly by the suction of a cooling light.

Although seals are very effective to stop particulate and liquids entering an enclosure, this effectiveness is particularly increased if they can be compressed into seats. This is not always possible particularly where the equipment has to be readily dismantled for service.

It is these issues that have brought about the present invention.

WO 00/47932 A discloses a headlight assembly with an electrical equipment with a sealed chamber including a light bulb. The sealed chamber has a housing with an opening, wherein in the opening a vent system is placed. The vent system comprises a water vapour permeable membrane, a dessicant and a diffusion channel connecting the inside of the sealed chamber with the exterior. The dessicant can consist of various materials with the desired function. The membrane can be a microporous membrane material which is permeable.

US 4,809,144 discloses another similar electrical equipment in the form of a vehicle headlamp with a vent hole. In the vent hole, a low-temperature drying agent is located. It comprises a permeable film on the one end.

From US 6,422,729 B1 another similar electrical equipment is known with a drying agent in the form of a fibre mat in a passage between a housing of the electrical equipment and the exterior.

### SUMMARY OF THE INVENTION

According to the present invention an electrical equipment comprises a sealed chamber in which a light element is housed, and a multi-stage breather filter attached to the sealed chamber whereby in use heat generated by the light element causes air flow through the filter and also dries moisture collected by the filter. The filter comprises a filter housing defining an airflow passageway, the passageway including successive filter stages defined by
a) a porous membrane
b) activated carbon, and
c) silica gel.

Preferably the passageway defines an air inlet at one end and an outlet at the other, the outlet being coupled to the light element.

### DESCRIPTION OF THE DRAWINGS

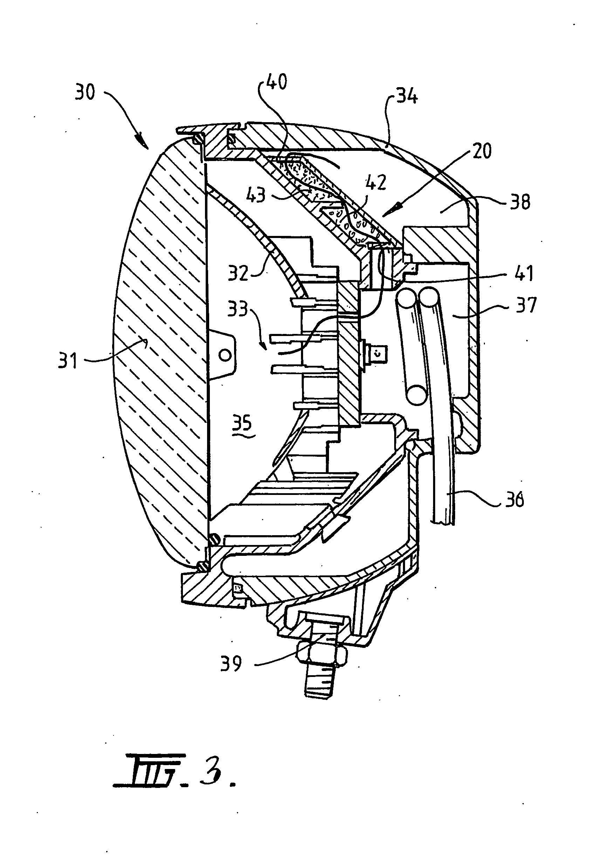

Embodiments of the present invention will now be described by way of example only with reference to the accompanying drawings in which Figure 2 which is a schematic illustration of a light fitting incorporating a filter in accordance with an embodiment of the present invention, and Figure 3 is a sectional view of a driving light incorporating a filter of the invention.

### DESCRIPTION OF THE PREFERRED EMBODIMENTS

The preferred embodiment as illustrated in Figure 2 is a schematic illustration of a light fitting that comprises a rectangular enclosure 10 that contains a light bulb 11. The enclosure 10 is sealed by an external cover 12 via a peripheral seal or gasket 13. A filter 20 in the form of a cascade filter is adapted to be coupled to the enclosure. The cascade filter comprises a cylindrical housing 21 open at both ends 22 and 23 to define a fluid passageway. One end 23 is in fluid communication with the enclosure 10. The cylindrical housing 21 includes a block 25 of silica gel granules adjacent the end 23 that is attached to the housing 11. The block 25 of gel is positioned slightly spaced apart from a block 26 of activated carbon granules. A membrane barrier 27 is positioned on top of the activated carbon block 26 in close proximity to the outlet 22 of the housing 21. The filter 20 is designed so that air can flow in and out of the filter as described below.

The filter operates in the following manner. Initially the light goes through the three steps described in the introduction of the specification. Step 4 starts when the lamp 11 is switched off and the internal air starts to cool and the pressure decreases whereby drawing air into the enclosure 10 through the cascade filter 20. The air first passes through the micro-porous membrane 27 that is fabricated from PTFE or other such material. This membrane 27 filters out particulate matter to a predetermined size, typically to sub-micron level. The membrane also forms a vapour barrier that stops water entering. This can include pressurised water and detergents from high pressure cleaners.

The air then passes through the activated carbon block 26 that strips most corrosive chemicals and free radical oxidants through adsorption. After leaving the activated carbon block 26 the air passes through silica gel 25 that dehydrates the air further. The air then enters the enclosure 10 at ambient temperature and pressure containing no moisture or corrosive agents. When the light is switched on and starts to radiate 80% or more energy as heat into the trapped air, the air heats up effectively increasing its temperature and pressure. The pressurised internal air now exits the filter 20 until the internal pressure is equal to the ambient pressure. When the lamp is switched off the operation is repeated. In this manner the cyclic turning on and off of the lamp does not draw moisture or corrosive elements into the enclosure.

The filter 20 effectively cleans the air mechanically and chemically to a level that prevents deterioration of the optical surface through corrosion and contamination. This ensures that the light effectively retains the light output and distribution to which it was originally designed, whilst extending its operational life significantly. Because the exiting air is hot and at a higher pressure than the ambient air, it dries out the silica gel 25 on the way out removing the moisture to the atmosphere. Thus all the benefits of higher volumetric moisture capacity of warm air accrues to the recycling system. The PTFE membrane 27 is self cleaning because dirt does not stick to it.

Whilst Figure 2 is merely a schematic illustration of the introduction of the filter it will be understood that electrical equipment would be designed to incorporate the filter at the design phase of the product.

Figure 3 is a cross sectional view of a driving light for a vehicle that incorporates a breather filter 20 of the kind described above. The driving light 30 shown in figure 3 includes a lens 31 that is in sealed attachment to a parabolic reflector 32 that in turn houses an appropriate light bulb 33 contained in the optical cavity 35. The reflector 32 lens 31 and light bulb 33 are all supported by a housing 34 that surrounds the rear of the reflector and includes a mounting bracket 39. The housing 34 is also coupled to an electrical lead 36 that is wired to the rear of the light bulb through a sealed cap 37 at the rear of the optical cavity 35. The housing 34 incudes an air cavity 38 to the rear of light that is in fluid communication with the optical cavity 35.

Interposed in series with the optical cavity 35 and the air cavity 38 is the multi-stage filter 20. The air cavity 38 is in direct communication with the external atmosphere. The multi-stage filter 20 comprises microporous filter mediums 40 and 41 at the air entry side and optical cavity 35 side of the filter. Between the two microporous filters is a cavity 42 filled with activated carbon on the optical cavity side and a cavity 43 filled with silica gel on the air entry side of the filter. The wavy line on Figure 3 indicates the air path in and out of the optical cavity 35 via the multi-staged filter 20.

In all cases the filter is designed in the position whereby the majority of the air flows through the low resistance filter with only a small proportion passing through the high resistant paths that would be represented by seals and gaskets. This simple measure reduces the effect of seal imperfection and maintains the initial effectiveness over the life of the product. Because there is effectively no pressure differential across the seals, the stress is reduced eliminating air transportation and capillary action. Thus with correct implementation it is considered that the filter will extend the life of the product, the seals and the enclosure without additionally adding to the production costs. The use of a filter of the kind described above provides ventilation for enclosures that will solve the vast majority of corrosion and fouling problems that occur. This sort of equipment is particularly useful where the equipment is continually used in dirty or corrosive environments like mines or petrochemical plants. It is further understood that the filter will be used with a whole variety of electrical equipment not just lighting systems.

The preferred embodiment utilises a three stage filter that incorporates a microporous membrane usually fabricated from PTFE. Typical medias include membrane materials such as, but not limited to, expanded polytetrafluoroethylene membrane, polypropylene membrane, nylon membrane, polycarbonate and polyester membranes, mixed-esters of cellulose membrane, polyvinyl chloride membrane, cellulose triacetate membrane, and thin film composite membranes and/or laminates thereof.

The most preferred filtering layer is expanded polytetrafluoroethylene (PTFE) because of its good filtration performance, conformability to cover absorbent layers, and cleanliness.

## Claims

1. Electrical equipment comprising a sealed chamber (10,35) in which a light element (11,33) is housed, and a multi-stage breather filter (20) is attached to the sealed chamber, whereby in use heat generated by the light element (11, 33) causes air flow through the filter (20) and also dries moisture collected by the filter, the filter (20) comprising a filter housing (21) to define an airflow passageway, **characterized in that** the passageway includes a series of filter stages defined by:
a) a porous membrane (27,41)
b) activated carbon (26,42), and
c) silica gel (25,43).

2. The electrical equipment according to claim 1 wherein the passageway defines an air inlet (22) at one end and an outlet (23) at the other, the outlet being coupled to the sealed chamber (10,35).

3. The electrical equipment according to claim 1 or 2 wherein the porous membrane (27,41) is fabricated from PTFE.

4. The electrical equipment according to claim 3 wherein the porous membrane (27,41) is positioned adjacent the exterior with the silica gel (25) being positioned adjacent the sealed chamber (10), and the activated carbon (26) positioned therebetween.

5. The electrical equipment according to any one of the preceding claims wherein the sealed chamber (10, 35) is sealed by seals and/or gaskets (13) and wherein the resistance to air flow through the seals and/or gaskets is substantially higher than through the filter (20).

## Patentansprüche

1. Elektrisches Gerät umfassend eine geschlossene Kammer (10, 35), in der ein Lichtelement (11, 33) untergebracht ist und ein mehrstufiger Belüftungsfilter (20) an der geschlossenen Kammer angebracht ist, wodurch bei Anwendung durch das Lichtelement (11, 33) erzeugte Wärme einen Luftstrom durch den Filter (20) bewirkt und auch im Filter angesammelte Feuchtigkeit trocknet, wobei der Filter (20) ein Filtergehäuse (21) umfasst, das einen Luftstromweg definiert, **dadurch gekennzeichnet, dass** der Weg eine Reihe von Filterstufen aufweist, die definiert sind durch:
a) eine poröse Membran (27, 41),
b) Aktivkohle (26, 42) und
c) Silicagel (25, 43).

2. Elektrisches Gerät nach Anspruch 1, wobei der Weg einen Lufteinlass (22) an einem Ende und einen Auslass (23) am anderen definiert, wobei der Auslass mit der geschlossenen Kammer (10, 35) gekoppelt ist.

3. Elektrisches Gerät nach Anspruch 1 oder 2, wobei die poröse Membran (27, 41) aus PTFE gefertigt ist.

4. Elektrisches Gerät nach Anspruch 3, wobei die poröse Membran (27, 41) angrenzend an die Außenseite positioniert ist, das Silicagel (25) angrenzend an die geschlossene Kammer (10) positioniert ist und die Aktivkohle (26) dazwischen positioniert ist.

5. Elektrisches Gerät nach einem der vorhergehenden Ansprüche, wobei die geschlossene Kammer (10, 35) durch Versiegelungen und/oder Dichtungen (13) verschlossen ist und wobei der Luftströmungswiderstand durch die Versiegelungen und/oder Dichtungen im Wesentlichen höher ist als durch den Filter (20).

## Revendications

1. Équipement électrique comprenant une chambre étanche (10, 30) dans laquelle est logé un élément générateur de lumière (11, 33), et un filtre reniflard à étages multiples (20) est fixé à la chambre étanche, de telle sorte que lors de l'utilisation, la chaleur produite par l'élément générateur de lumière (11, 33) provoque un flux d'air à travers le filtre (20) et sèche également l'humidité collectée par le filtre, le filtre (20) comprenant un boîtier de filtre (21) pour définir un passage de flux d'air, **caractérisé en ce que** le passage comprend une série d'étages de filtrage définis par :
a) une membrane poreuse (27, 41)
b) du charbon actif (26, 42), et
c) du gel de silice (25, 43).

2. Équipement électrique selon la revendication 1, dans lequel le passage définit un orifice d'entrée d'air (22) à une extrémité et un orifice de sortie (23) à l'autre extrémité, l'orifice de sortie étant relié à la chambre étanche (10, 35).

3. Équipement électrique selon la revendication 1 ou 2, dans lequel la membrane poreuse (27, 41) est fabriquée à partir de PTFE.

4. Équipement électrique selon la revendication 3, dans lequel la membrane poreuse (27, 41) est positionnée de façon adjacente à l'extérieur, le gel de silice (25) étant positionné de façon adjacente à la chambre étanche (10), et le charbon actif (26) étant positionné entre ceux-ci.

5. Équipement électrique selon l'une quelconque des revendications précédentes, dans lequel la chambre étanche (10, 35) est rendue étanche par des éléments d'étanchéité et/ou des joints (13), et dans lequel la résistance au flux d'air à travers les éléments d'étanchéité et/ou les joints est sensiblement plus élevée qu'à travers le filtre (20).
